**Europäisches Patentamt**

**European Patent Office**

**Office européen des brevets**

(19)

(11) Publication number : **0 344 896 B1**

# (12) EUROPEAN PATENT SPECIFICATION

(45) Date of publication of patent specification :
**17.06.92 Bulletin 92/25**

(51) Int. Cl.[5] : **F16L 58/18,** F16L 55/16,
F16L 58/10

(21) Application number : **89303749.9**

(22) Date of filing : **14.04.89**

(54) **A lining laminate for a pipeline and an operation method thereof.**

(30) Priority : **03.06.88 JP 135409/88**

(43) Date of publication of application :
**06.12.89 Bulletin 89/49**

(45) Publication of the grant of the patent :
**17.06.92 Bulletin 92/25**

(84) Designated Contracting States :
**BE CH DE ES FR GB IT LI NL SE**

(56) References cited :
**EP-A- 0 100 579**
**CA-A- 1 232 553**
**DE-A- 3 113 998**
**FR-A- 2 550 309**

(56) References cited :
**PATENT ABSTRACTS OF JAPAN, vol. 1, no. 79, 26th July 1977, page 1518 (C-77); & JP-A-52 40 541 (NITTO DENKI KOGYO K.K.)29-03-1977**
**PATENT ABSTRACTS OF JAPAN, vol. 6, no. 261, 21st December 1982, page 127 (C-141)[1139]; & JP-A-57 155 278 (NITTO DEN-KIKOGYO K.K.) 25-09-1982**

(73) Proprietor : **Takei, Norio**
**19-24, Mita 4-Chome Minato-Ku**
**Tokyo (JP)**

(72) Inventor : **Takei, Norio**
**19-24, Mita 4-Chome Minato-Ku**
**Tokyo (JP)**

(74) Representative : **White, Martin David et al**
**MARKS & CLERK 57/60 Lincoln's Inn Fields**
**London WC2A 3LS (GB)**

## Description

This invention relates to a pipe length provided with a lining laminate containing a pressure sensitive adhesive and an operation method thereof. Particularly, it relates to a pipe length usable for improving various existing pipelines; transportation of an abrasive fluid such as slurry, particles, dredged sand and stone or the like; transportation of a corrosive fluid such as sea water, $CO_2$ gas, sour gas or the like; transportation of reserved water in water-power generation; transportation of service water and sewage and transportation of hot water in geothermal power generation, such as from hot spring and the like as well as an operation method thereof.

At the present, a method wherein water reserved in a dam is led up to a position having a large water falling difference through a water passage tunnel and passed therefrom through an iron water pressure pipe to a power plant is adopted as a technique for the transportation of reserved water in water-power generation.

In such a known method, it is common to arrange sand settling equipment on an inlet of the water passage tunnel for removing sand. Still, sand-containing water passes through the iron water pressure pipe at a high speed of 2~10 m/sec, so there is a drawback that the degree of wearing of the iron pipe becomes conspicuous. For example, in a connecting portion between the pipes through an expansion joint, an annular space for expansion is arranged for overcoming the temperature difference (about 80°C) resulting from the difference between day and night, season change and the like. In this case, sand contained in the flowing water is entrapped in the annular space to cause a so-called strong erosion, and also this erosion is promoted due to cavitation produced by whirl flow, whereby the service life of the pipe is considerably shortened. The settlement of earth and sand is particularly likely to be caused in the annular space arranged in the connecting portion through the expansion joint. Considering, for example, a case wherein an earthquake occurs during such a sedimentated state, and the iron pipe slides in the axial direction of the pipe in such a way that sand is entrapped in the annular space; one typical result is that a rubber ring for sealing which is housed in the space could be injured hence causing water leakage.

For this connection, the inventor has previously proposed a method of improving the existing water pressure pipe as a technique for solving problems in water pressure pipes, details of which are disclosed in Japanese laid open Patent No. 61-282687. Even in this prior technique, however, it is an actual circumstance that the damage of the expansion joint due to the sliding of such a joint during the occurrence of an earthquake can not sufficiently be prevented.

Furthermore, according to this prior technique, the portion corresponding to the above annular space forms a connecting portion in the lining, so that when a rapid force such as a earthquake or the like is applied to the connecting portion, the peeling and breakage of the connecting portion are still likely to be caused; while the annular space is enlarged, even under the action of moderate force such as temperature change or the like, to cause flowing of the pressure sensitive adhesion layer disposed in the connecting portion, and thinly stretch the lining tube. As a result, the lining tube becomes brittle and the service life of the pipe undesirably becomes shorter.

In addition, when in use with the connecting portion between the above known pipe lengths, the lining structure, particularly the lining structures at the expansion joint portion, has the following drawbacks:

In the case where the lining layer is not included in the pipe length, and the pipe length uses the bellows or sleeve type expansion joint, the end portion of the pipe length is likely to be broken by galling under the influence of sand and the like contained in the flowing water, as previously mentioned, and also the sliding face of the seal or the like is corroded, thereby shortening the service life of the seal.

In case of the pipe length provided with a lining layer, the influence of sand in the flowing water is less. However, since the lining tube is frequently bonded to the inner surface of the pipe length by an adhesive, the lining tube and the adhesive layer cannot cope with moderate stretching of the pipe length accompanied with termperature change, or the rapid sliding of the pipe due to an earthquake or the like. In other words, the lining cannot follow the stretching of the expansion joint. For example, when the pipe length contracts due to a temperature drop (for example during the winter or night) thereby causing an enlargement of the annular space, or when the pressure inside the pipe undergoes a large change, a portion of the lining tube corresponding to the annular space portion in the joint is elongated to reduce the thickness of the tube or form a recess or protrusion. Further, a loading which is associated with the ordinary stretching is always added to the lining tube in addition to the above stretching, whereby the lining tube becomes uneven, and as a result the degradation of the lining tube is thereby shortening the service life of the pipe.

CA-A-1 232 553 discloses a lined pipe formed by adhering a flexible tubular liner to an inner surface of a pipe length other than both end portions thereof using a pressure sensitive adhesive, and airtightly bonded to the both end portions of the pipe length using a conventional adhesive such as a two-part epoxy adhesive

Even in case of a pipe length provided with a lining using a pressure sensitive adhesive sheet, it is impossible to supplement the pressure sensitive adhesive sheet by an amount corresponding to the increase of volume in the annular space portion produced by the contraction of the pipe, hence the lining layer may still be rendered uneven and the peeling or breakage of the lining tube in the connecting portion between the pipe lengths may still occur, thereby injuring the seal.

In general, defects such as rust, scale, scab and the like are existent on the inner surface of the pipe length and are usually caused by faults. If the pipeline is formed by forming the lining under inadequate ambient conditions, high pressure gas, corrosion products and the like remain in the faulty portions during use over long periods and cause blistering in the lining layer, whereby the durability of the lining tube is lowered. Furthermore, a non-adhesive portion of the lining is generated on a weld bead portion on the inner surface of the welded joint between the pipe lengths. Moreover, when the lining tube is drawn into the inside of the pipe lengths, there results a problem of the peeling off of the pressure sensitive adhesion layer from the lower portion of the lining tube.

It is, therefore, an object of the present invention to provide a novel lining laminate structure for a pipe length which is capable of solving the above problems of the conventional techniques, and an operation method thereof.

According to a first aspect of the invention, there is provided a pipeline provided with a lining laminate comprising:- a plurality of pipe lengths, which are individually connected to each other through one or more expansion joints; and a lining tube arranged within and adhered to inner surfaces of the pipe lengths by use of a layer of pressure sensitive adhesive, said pressure sensitive adhesive being interposed between said pipe lengths and said lining tube, characterised in that said pressure sensitive adhesive occupies an annular space in each of one or more connecting portions between said pipe lengths; in that said layer of pressure sensitive adhesive comprises a reinforcing sheet with a pressure sensitive adhesive applied to both surfaces thereof; and in that a woven fabric impregnated with liquid plasticizer containing a rust preventive agent is interposed between said pressure sensitive adhesive and said pipe lengths, such that said lining tube, said layer of adhesive, said reinforcing sheet and said impregnated woven fabric form, in combination, the lining laminate.

In a further embodiment according to the above mentioned first aspect of the present invention there is provided a rigid outer sleeve provided at its inner peripheral surface with a plurality of protrusions, said outer sleeve being fitted to an outer surface of an end portion of said pipe length, which pipe length is to be connected thereby to another pipe length, and a rubber ring and a rubber band which are disposed within an annular space defined between the outer sleeve and a tapered part of said end portion, and a pressure sensitive adhesive which fills the remainder of said annular space

In a further embodiment according to the above mentioned first aspect of the present invention there is provided a pipe length provided with a lining laminate having an outer sleeve which outer sleeve is fitted to an outer surface of an end portion of the pipe length which pipe length is to be connected thereby to another pipe length through a pair of flanges, and a rubber ring which is interposed between the flange and a tapered end portion of the outer sleeve, and wherein the pressure sensitive adhesive fills in a space between the outer sleeve and an end of the pipe length to be connected thereto.

In a further embodiment according to the above mentioned first aspect of the present invention there is provided a pipe length provided with a lining laminate wherein one of pipe lengths to be connected is fitted into an end portion of another pipe length, and a rubber ring is inserted in a space between the fitted pipe lengths, and the resulting assembly is fixed under pressure through a ground cover, and the pressure sensitive adhesive fills in a space produced in the connecting portion between the pipe lengths.

In a further embodiment according to the above mentioned first aspect of the present invention there is provided a pipe length provided with a lining laminate wherein one of pipe lengths to be connected is fitted into an end portion of another pipe length, and a rubber ring is inserted in a space between the fitted pipe lengths, and the resulting assembly is fixed under pressure through a ground cover, and the pressure sensitive adhesive fills in a space defined between the inner peripheral surface and the contacting surface of the pipe and also a space defined between joint faces of the pipe lengths.

In other preferred embodiments according to the first aspect of the present invention, a reinforcing sheet constituting the core of a pressure sensitive adhesive double coated sheet has a rigidity enough to withstand the shearing yield stress of the pressure sensitive adhesive and also has good aging and degradation resistances. The pressure sensitive adhesive has a shearing yield stress of not less than a friction force between the flowing water and the tube wall. Moreover, a separation sheet is embedded in the pressure sensitive adhesive, which pressure sensitive adhesive fills in the annular space, and is made from a material such as vinyl sheet or the like, and obstructs and/or restrains diffusion of the liquid plasticizer. In addition, a woven fabric impregnated with the pressure sensitive adhesive is used instead of the woven fabric impregnated with the liquid plasticizer; and the lining tube, pressure sensitive adhesive and the woven fabric impregnated with the pressure sensitive adhesive are clamped in an airtight manner by means of a flange arranged on the end portion of the pipe length.

According to a second aspect of the invention, there is provided a method of forming a long pipeline by connecting pipe lengths to each other through at least one intermediate expansion joint and arranging a lining tube on an inner peripheral surface of a pipe length through a pressure sensitive adhesive, which comprises initially setting pressure sensitive adhesive in a ring-like form in an annular space portion defined by an expansion joint;

-folding the lining tube in to a flat form and at the same time piling and mounting a pressure sensitive adhesive double coated sheet, embedding a reinforcing sheet, therein, and a woven fabric impregnated with a liquid plasticizer on upper and lower faces of the folded lining tube;

rounding the folded lining tube, provided with the pressure sensitive adhesive double coated sheet and the woven fabric, into a cylindrical form, spirally winding a fastening string around the lining tube, drawing the rounded lining tube into an inside of an end portion of the pipe length by the guidance of a wire rope and passing it through the pipe length;

fixing a rear end portion of the lining tube to the inner peripheral surface of the end portion of the pipe length at a lead-in side of the pipe length, and arranging a launcher for a pig member at the lead-in side of the pipe length and a catcher for the pig member at a feed-out side of the pipe length;

fitting the pig member arranged in the launcher, the pig member having a freely reduceable diameter which is normally larger than the diameter of the lining tube, into a rear opening portion of the lining tube; and

pumping compressed air into the launcher to pressurize a back face of the pig member and simultaneously sucking air from the catcher to progress the pig member forward, whereby the folded lining tube is successively enlarged to push and adhere to the inner peripheral surface of the pipe length.

An embodiment of the invention will now be described by way of example and with reference to the accompanying drawings, wherein:

Figs. 1 to 4 are views, partly in section, of various embodiments of an expansion joint portion in a pipe length in accordance with the invention;

Fig. 5 is a schematic view illustrating the behaviour of a separation sheet containing pressure sensitive adhesive and liquid plasticizer in the expansion joint portion shown in figures 1 to 4;

Fig. 6 is a graph showing the relationship between shearing tensile velocity and shearing yield stress in the pressure sensitive adhesive shown in figure 5;

Fig. 7 is a sectional view illustrating the lining operation for a pipe length;

Fig. 8 is a view, partly in section, of the end portion of a pipe length;

Fig. 9a to 9d are schematic views illustrating steps for lining a curved pipe length; and

Figs. 10a and 10b are schematic views illustrating steps for lining a branched pipe length.

It is a first important point that woven fabric impregnated with liquid plasticizer is interposed between a pipe length and a pressure sensitive adhesive double coated sheet.

The woven fabric is desirably made from a material having a degree of rigidity, particularly a material having a rigidity that is high enough to reduce shearing yield stresses subjected to a lining tube made of a material having a high elasticity such as flexible rubber or the like.

The liquid plasticizer impregnated in the woven fabric is a substance which acts upon the pressure sensitive adhesive sheet and the pressure sensitive adhesive which fills in the annular space of the expansion joint portion to enhance the plasticity thereof, and which has a proper viscosity and penetrates into gaps of the woven fabric but does not flow out therefrom due to its deadweight or squeeze out by slight stress.

For example, a solution of an organic rust preventive agent in liquid polybutene resin and/or a mixture of liquid polybutene resin and an inorganic rust preventive agent may be used as a plasticizer having such properties.

If, when the woven fabric impregnated with the liquid plasticizer is interposed between the pipe length and the pressure sensitive adhesive sheet, a shift in position between the pipe length and the lining tube is caused, the shear stress applied to the pressure sensitive adhesive sheet can be relaxed by the action of the woven fabric.

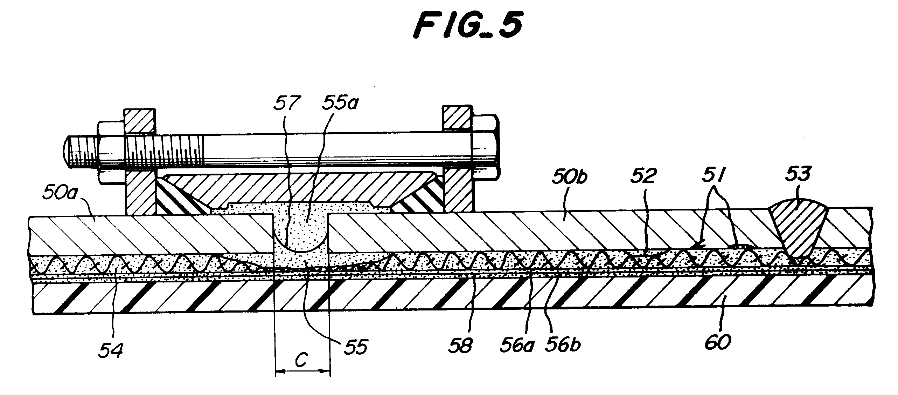

As shown in Fig. 5, if rust, scale, scab and the like are existent on the inner peripheral surface of the pipe length, the above liquid plasticizer penetrates into a gap portion 51 created by these defects, an air retaining portion 52, and a gap portion in a weld zone 53, and effectively serves to prevent storing of high pressure gas and corrosive substance therein.

Further, the liquid plasticizer impregnated in the woven fabric 54 serves to soften the pressure sensitive adhesive 55 or the like, which fills in the annular space C of the expansion joint portion, and facilitate the flowing thereof. As a result, when the annular space C between the pipe lengths is reduced by the action of a moderate force, such a temperature change, or by the action of a rapid force, such as an earthquake, or the like, the softened and easily flowing pressure sensitive adhesive 55 flows in the longitudinal direction of the woven fabric and dispersedly penetrates into the woven fabric to absorb so-called extra adhesive and liquid plasticizer. On the other hand, when the annular space C is inversely enlarged, the pressure sensitive adhesive 55 moves from the woven fabric 54 toward the annular space C and also the liquid plasticizer oozes from the woven fabric toward the space C.

A second important feature of the pipe length lies in that the above high viscosity and non-drying pressure sensitive adhesive fills the annular space C created in the so-called expansion joint. This pressure sensitive adhesive is a substance exhibiting a rheological (viscoelastic) behavior. That is, this substance flows gently, like a liquid, under a moderate loading such as a temperature change and exhibits a solid-like behavior under the action of a rapid external force such as an earthquake. Therefore, the pressure sensitive adhesive showing elastic deformation is required to have a penetration degree of 30~100°, preferably 30~50°.

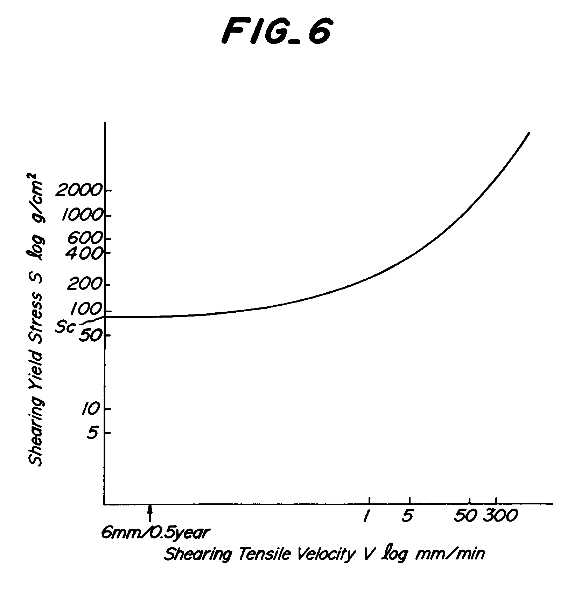

Fig. 6 shows a relationship between shearing tensile velocity V and shearing yield stress S in the pressure sensitive adhesive. As seen from Fig. 6, the shearing yield stress S reduces with the decrease of the shearing tensile velocity V, as a property of the pressure sensitive adhesive used in the invention, but it does not drop below a limit shearing stress Sc of 80 $g/cm^2$ (1 $g/cm^2$ = 0,0098 $N/cm^2$). This means that when a shearing force over the limit shearing stress Sc is applied to the pressure sensitive adhesive at a very slow velocity, the adhesive flows like a liquid.

In case of the usual solid adhesive, the shearing adhesion strength is 10~25 $kg/cm^2$, which is very large compared with that of the pressure sensitive adhesive. Hence, when an external force over the above value is applied to the solid adhesive, adhesion breakage occurs which is different to the case of the pressure sensitive adhesive.

The pressure sensitive adhesive according to the invention is a non-crosslinking, high molecular weight polymer permanently exhibiting an adhesion property, however, it is not solidified by drying or polymerization. This differs from the case of a solid adhesive, which is produced, for example, by mixing an elastomer (natural rubber, butyl rubber), a plasticizer (polybutene resin), a filler, an antioxidant, a thickener (talc powder, calcium carbonate power, clay) and the like according to a given mixing ratio.

The pressure sensitive adhesive is required to hold a friction force against a pipe wall accompanied with the flowing of fluid in the pipe, so pressure sensitive adhesives having a limit shearing stress larger than the above friction force are used.

For example, when a rapid external force such as an earthquake is applied to the pipe, the pressure sensitive adhesive filling in the annular space serves to prevent displacement between the pipe and lining tube through dash-pot action. Further, this adhesive is displaced by elastic stretching of the joint as a rigid body, but it shows a large viscosity resistance to such a displacement to absorb vibrations accompanied with this displacement. On the other hand, a small shearing force acts upon the moderate displacement, accompanied with the change of temperature, water temperature or the like, such as stretching in the axial direction of the pipe, so that the pressure sensitive adhesive flows like a liquid to relax the stresses upon such a displacement.

In general, the pressure sensitive adhesive has a velocity (time) dependency as shown in Fig. 6 and also has a temperature dependency. That is, the viscosity increases as the temperature lowers. Furthermore, the limit shearing yield stress Sc differs in accordance with the thickness of the pressure sensitive adhesive, which is in inverse proportion to the thickness.

The shearing yield stress of the pressure sensitive adhesive was measured at various velocities, under the following conditions, to determine the limit shearing yield stress Sc at a lowest temperature.

Test temperature:

Lowest temperature in a region for arranging pipe lengths

Material used as the pressure sensitive adhesive:

Same composition as in the pressure sensitive adhesive sheet used for lining the pipe length

Thickness of pressure sensitive adhesive:

Same thickness as in the pressure sensitive adhesive sheet used for lining the pipe length

Outside of lining tube:

Between the inner peripheral surface of the pipe length and the lining tube, pressure sensitive adhesive layers 56a and 56b are arranged thereby sandwiching a reinforcing sheet 58 as a core and having a sufficient durability to the limit shearing yield stress Sc at the lowest temperature, as shown in Fig. 5. When the pipe length is stretched by a temperature change or the like, the lining tube is not elongated owing to pressure sensitive layers 56a and 56b and the reinforcing sheet 58, while the woven fabric 54 impregnated with the liquid plasticizer corresponds to such an elongation of the pipe and hence the plasticizer flows out from the woven fabric to cause stress relaxation.

The pressure sensitive adhesive fills in the annular space C to such an extent that the pressure sensitive adhesive expands toward the inner surface side of the pipe length upon the instigation of stretching of the annular space. When the pressure sensitive adhesive 55 fills to such an extent that the inner face of the lining tube protrudes inward, the lining tube in the expansion joint portion initially expands, and finally becomes flat. That is, since the woven fabric 54 impregnated with the liquid plasticizer is interposed between the inner peripheral surface of the pipe lengths 50a, 50b and the outer peripheral surface of the pressure sensitive adhesive layer 56a, when a pressure is applied to the inside of the pipe length, the liquid plasticizer oozes out from the woven fabric to soften only the pressure sensitive adhesive therearound. Consequently, only the softened pressure sensitive adhesive flows and diffuses in the axial direction of the pipe length, and the woven fabric 54 itself moves together under an influence of the pressure inside the pipe, whereby the lining tube is held at a flat state.

Moreover, the pressure sensitive adhesive is softened by contact with the liquid plasticizer which contact lowers it's viscoelastic (rheological) property.

Therefore, in order to achieve the result that the viscosity of the pressure sensitive adhesive drops considerably due to the influence of temperature, to prevent the rubber ring in the expansion joint degrading in a hot transportating pipe or the like, it is desirable to embed the separation sheet 57 in the pressure sensitive adhesive.

A material impermeable to the liquid plasticizer is used as the separation sheet 57. By embedding such a separation sheet 57 in the pressure sensitive adhesive 55 at the annular space, the viscosity of the pressure sensitive adhesive portion 55a not contacting with the liquid plasticizer is made high. Particularly, the use of the separation sheet 57 effectively acts, and largely contributes, to prevent the degradation of the rubber ring or, if being degraded, the leakage of fluid from the expansion joint portion, because the pressure sensitive adhesive portion is hard outside the separation sheet and the pressure sensitive adhesive portion inside the separation sheet is softened by the plasticizer.

Moreover, the pressure sensitive adhesive sheet arranged along the inner peripheral wall of the pipe length must have a sufficient durability to the friction force of the pipe wall against the fluid passing through the pipe. In connection with the foregoing, an example of calculating the friction force on a pipe wall under conditions that the inner diameter of the pipe length is 24 cm, the length of the pipeline is 1 km and the pressure loss is 30 kg/cm$^2$ (1 kg/cm$^2$ = 9,8 N/cm$^2$), is disclosed in Japanese laid open Patent No. 60-121380. According to this publication, the friction force on the pipe wall is 1.7 g/cm$^2$, which is, typically, a large friction force. Generally, the friction force is a fair amount smaller than the above value. As previously mentioned, the limit shearing yield stress should be larger than the friction force of the pipe wall.

When the space of the annular space portion C varies in accordance with stretch sliding of the pipe, the relative displacement between the pipe length 50a, 50b and lining tube 60 produces a shear stress therebetween. The difference in thermal expansion coefficient between the pipe length and the lining tube also contributes to the shear stress. Due to these shear stresses, the liquid plasticizer impregnated in the woven fabric 54 is fluidized at an interface between the pipe 50a, 50b and the woven fabric 54.

Further, when uneven portions are created in the inner peripheral surface of the pipe length by the welding between the pipes and the occurrence of recesses through galling, the liquid plasticizer in the woven fabric buries these uneven portions to make the inner surface of the lining tube flat. In this case, it is important that proper fludization and thickness are given to the pressure sensitive adhesive layer by the liquid plasticizer to make the inner peripheral surface of the lining tube flat. From this viewpoint, it is desirable that the shearing yield stress of the pressure sensitive adhesive is not excessive.

According to the invention, when the pressure sensitive adhesive sheet is formed inside the pipe length, a pressure sensitive adhesive double coated sheet is first adhered to the outer surface of the lining tube, and then the thus treated lining tube is adhered to the inner peripheral surface of the pipe length. The pressure sensitive adhesive double coated sheet is formed by applying a pressure sensitive adhesive to both surfaces of a reinforcing sheet, as a core body, at a given thickness. Moreover, the thickness of the pressure sensitive adhesive adhered to each surface of the sheet must be kept unchanged until the lining tube 60 is completely drawn inside the pipe lengths 50a, 50b, hence the pressure sensitive adhesive is preferably hard.

In addition, the thickness of the pressure sensitive adhesive applied to each surface of the sheet is dependent upon the function of the adhesive, and the diameter of the pipe and the like, it is, however, usually about 1 mm. Sheets or nonwoven fabrics of nylon, tetron, metal and the like may be used as the reinforcing sheet. In other words, the reinforcing sheet 58 and the woven fabric 54 have a proof strength durable to a force for drawing the lining tube into the pipe lengths and do not stretch unnecessarily.

Neotape No. 5222 (trade name, made by Matsumura Sekiyu K.K.) is used as an example of the pressure sensitive adhesive double coated sheet. In this case, the pressure sensitive adhesive has a penetration degree of 30~45° (according to JIS K2207, 25°C, 5 sec, 50 g). The reason the penetration degree is limited to the above range is based on the fact that the thickness of the double coated sheet does not change till the lining tube adhered with this sheet is drawn into the inside of the pipe lengths after transportation from the storing position. The pressure sensitive adhesive is softened by the liquid plasticizer in the woven fabric to smoothen the uneven portions (weld beads and the like) on the inner peripheral surface of the pipe length. Similarly, the pressure sensitive adhesive filling in the annular space of the expansion joint portion is preferably hard when the pipe lengths are connected to each other.

The lining laminate can be formed in the following manner.

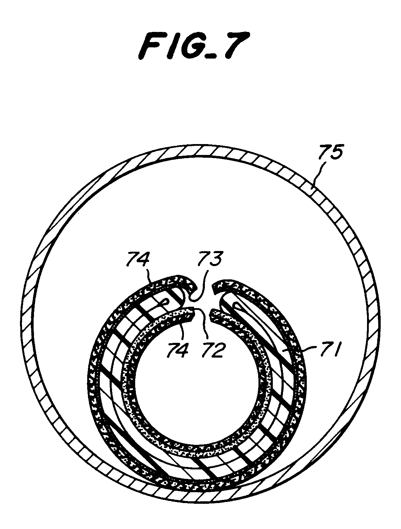

When the pressure sensitive adhesive double coated sheet is adhered to the outer surface of a lining tube, as shown in Fig. 7, the lining tube 71 is folded into a flat form, and pressure sensitive adhesive double coated sheet 72 and 73 are adhered under a pressure to upper and lower surfaces of the folded lining tube, and further woven fabrics 74 impregnated with a liquid plasticizer are adhered thereonto. In this case, it is important that air is not retained in the pressure sensitive adhesive double coated sheet. If the lining operation is performed in such a way that air remains in the sheet, the remaining air is collected during the passing of the pig member to form an air lump. When the pressure of the fluid becomes negative in use, the air lump expands to cause peeling of the lining tube. Consequently, the lining tube is not supported by the reinforcing sheet and becomes locally elongated.

Therefore, when the pipe length is durable to negative pressure, it is possible to suck out air from the inside of the pipe length in vacuo before enlarging the folded lining tube. On the other hand, when the pipe length is not durable to negative pressure, the enlarging rate of the folded lining tube must be kept low in order to sufficiently discharge the remaining air during the enlargement of the lining tube.

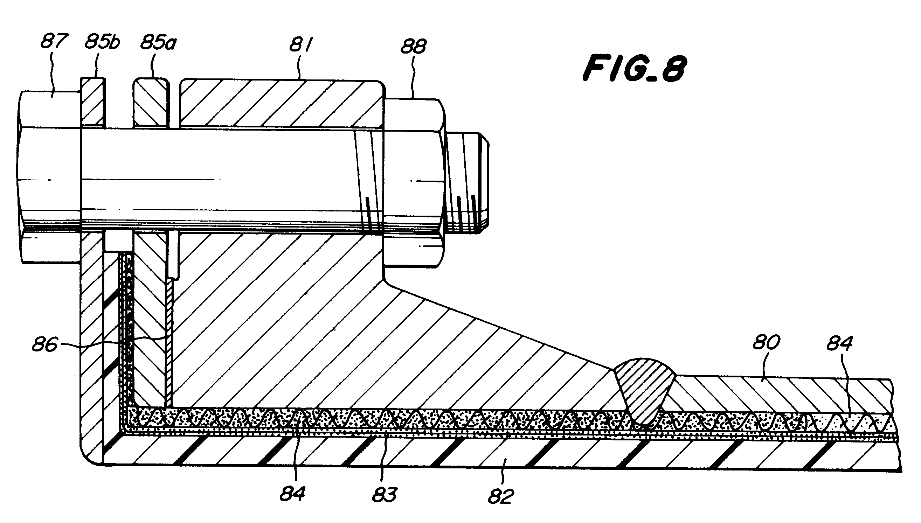

As shown in Fig. 8, a flange 81 is attached to an end of a pipe length 80, and a lining tube 82, a pressure sensitive adhesive double coated sheet 83 and a woven fabric 84 are sandwiched between a pair of fastening members 85a and 85b, which are clamped through a gasket 86 by means of a bolt 87 and a nut 88.

Due to the construction of the pipe length end of the above embodiment, liquid can not penetrate from the exterior of the pipe to between the pipe length and the lining tube, furthermore the liquid plasticizer impregnated in the woven fabric is not squeezed out therefrom to the outside. In this case, a high viscosity pressure sensitive adhesive is impregnated in the end portion of the woven fabric 84 instead of the liquid plasticizer, whereby the adhesion property of the woven fabric 84 is enhanced to increase the airtightness of the lining laminate structure at the end portion of the pipe length.

The operation method of arranging the lining tube inside the pipeline, including the expansion joints, with the pressure sensitive adhesive and woven fabric will be described in detail below.

The operation method comprises the following steps:

a.) a step in which a flexible lining tube covered with a pressure sensitive adhesive double coated sheet (pressure sensitive adhesive layer) and a woven fabric impregnated with a liquid plasticizer is folded and rounded as shown in Fig. 7 and a fastening string is spirally wound therearound for storing;

b) a step in which the flexible lining tube stored in the folded state is drawn from an end portion of a pipeline comprised of many pipe lengths, by the guidance of a wire rope, and passed therethrough to the other end of the pipeline;

c) a step in which ends of the flexible lining tube, pressure sensitive adhesive layer and woven fabric are adhered and fixed to a flange arranged on an inlet end portion of the pipeline, while a launcher for a pig member is disposed at the inlet end of the pipeline and a catcher for pig member is disposed at an outlet end of the pipeline, and a pig member having a freely reduceable diameter which is normally larger than the diameter of the pipe length is arranged in the launcher and fitted into an opening portion of the flexible lining tube; and

d) a step in which the inside of the pipeline is held under vacuum and compressed air is pumped into the launcher to pressurize a back face of the pig member and at the same time air is sucked out from the catcher (under vacuum) to project the pig member forward, whereby the folded flexible lining tube is successively enlarged and adhered to the inner peripheral surface of the pipeline by the action of the pig member.

In this method, the liquid plasticizer may be impregnated in the woven fabric just before the drawing of the lining tube into the pipe length.

Moreover, curved pipes, branched pipes and the like may be existent in the pipeline. In this case, it is important that a branched tube, curved tube or the like is adopted as the form of the lining tube so as to conform with the branched pipe, curved pipe or the like.

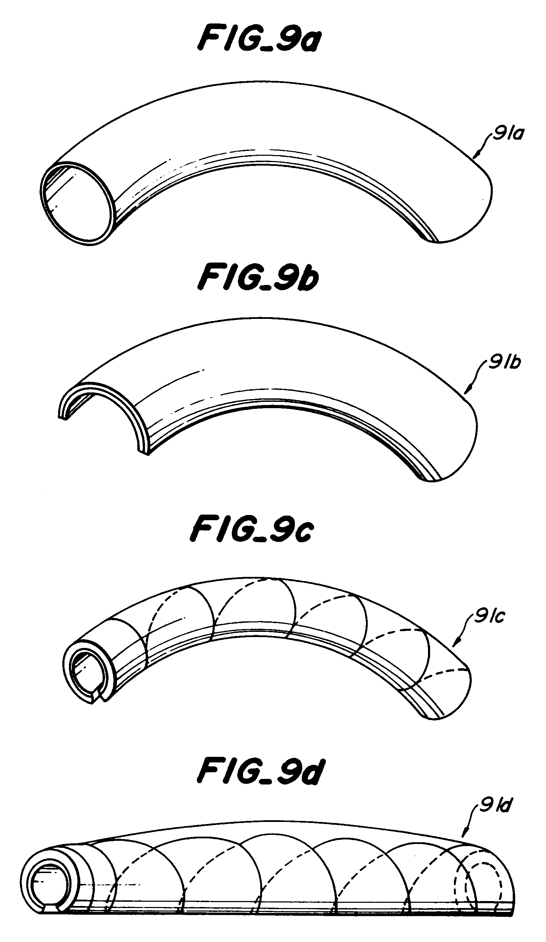

Fig. 9 shows a method for drawing a curved lining tube into a pipeline containing a curved pipe length therein. In this case, a surface of a lining tube is coated with a liquid plasticizer such as polybutene resin, whereby the adhesion of the pressure sensitive adhesive sheet to the lining tube is prevented for a given time. Thus, the lining tube can be curved in accordance with the curved pipe length at the same positions and to the same degree of curvature as the curved pipe length of the pipeline without being restrained by the reinforcing sheet in the pressure sensitive adhesive sheet (Fig. 9a). Then, the curved lining tube is folded in a flat form (Fig. 9b), rounded and fixed by spirally winding a fastening string therearound (Fig. 9c). Thereafter, the curved lining tube is drawn from the inlet end of the pipeline up to the given position, by the guidance of a wire rope, and successively enlarged toward the inner peripheral surface of the curved pipe length by the action of the pig member.

Furthermore, the curved lining tube 91a having the same curvature as the curved pipe length is connected to the lining tube at the same position as in the curved pipe length in the pipeline. Then, it is folded in a flat form 91b and rounded into a cylindrical form 91c, which is held by spirally winding the fastening string therearound. Thereafter, the curved form of the lining tube is corrected by drawing the string (91d), and the outer peripheral surface thereof is covered with the pressure sensitive adhesive sheet and woven fabric (not shown) for use in the lining of the pipeline. In this case, the drawing force of the lining tube is born by the pressure sensitive adhesive sheet and the woven fabric so as not to directly apply to the lining tube. Further, the tensile strength of the string is durable to the reaction force of the rounded and corrected lining tube, but is broken when tension based on the pumping pressure of the pig member in the enlargement of the lining tube is applied to the string. Moreover, the broken string is held in the pressure sensitive adhesive sheet after the enlargement of the lining tube.

After the curved lining tube is enlarged, the liquid plasticizer applied to the surface of the curved lining tube is transported toward the pressure sensitive adhesive sheet by the tube enlarging pressure, fluid pressure and the like, whereby the mutual dissolution between the pressure sensitive adhesive and the liquid plasticizer is promoted to attain strong adhesion between the pressure sensitive adhesive sheet and the lining tube.

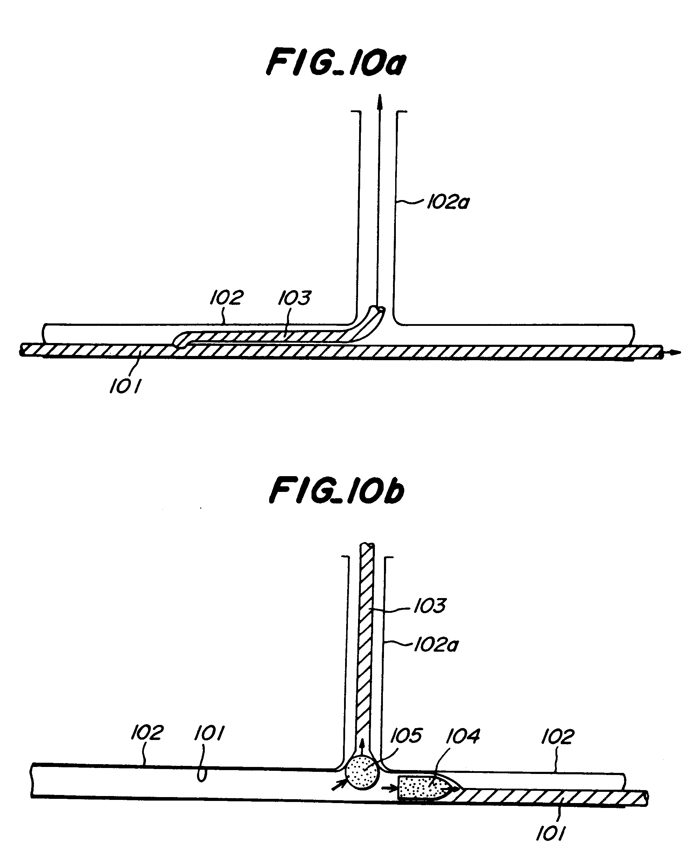

Fig. 10 shows a method of applying a lining tube to a pipeline having a branched pipe length. This method can be conducted in the same manner as the method of using the curved lining tube.

That is, the outer surface of the lining tube 101 is firstly coated with the liquid plasticizer to prevent the adhesion to the pressure sensitive adhesive sheet over a given time. Then, a lining tube 103 for branching, which is connected to the lining tube 101 at a position corresponding to the branched position (102a) of the pipeline 102, is rounded and held by spirally winding a fastening string therearound. Next, the lining tube 101 provided with the branched lining tube 103 is passed through the pipeline 102 and successively enlarged to the inside of the pipeline by the action of pig members.

In the enlargement of the lining tube, a projectile shaped pig member 104 and a spherical pig member 105 are transported together in the lining tube by pumping compressed air into the inside of the lining tube, whereby the projectile shaped pig member 104 successively enlarges the main lining tube 102 and is discharged from the outlet end of the pipeline 102, while the spherical pig member 105 turns at a branched point in the direction of the branched pipe length 102a and successively enlarges the branched lining tube 103.

Instead of the spherical pig member, a rubbery air bag (gum bladder) may be inserted into the inside of the lining tube, at a position near to the branched portion, and compressed air is pumped into the inside of the air bag, whereby the branched lining tube can be enlarged.

Even in case of a pipeline provided with a manhole, the lining can be performed by the above methods.

When the pressure sensitive adhesive sheet is adhered to the lining tube, strong adhesion can be obtained by applying a primer to the surface of the lining tube or by subjecting the surface of the lining tube to a specific treatment.

Moreover, swelling of the lining tube may be effected as a result of the kind of liquid plasticizer used. In this case, a material having a function to prevent the diffusion of liquid plasticizer is used as a reinfocing sheet of the pressure sensitive adhesive sheet. For example, nylon tape is used by previously subjecting both the surfaces of the tape to an ozone treatment for enhancing the adhesion property.

A fastening member for the end of the lining tube is affixed to the flange portion of the pipeline before the drawing of the lining tube, and rear ends of the lining tube, pressure sensitive adhesive sheet and woven fabric containing the liquid plasticizer are fixed to the flange face of the pipeline by the fastening member.

Furthermore, the circumferential positions of the lining tube and the pipe length can be accurately positioned by aligning bolt holes of the fastening member and the flange with each other by the action of bolts.

Such positioning is particularly important when a different size pipe length is located in the course of the pipeline because the form of the lining tube has been previously formed so as to meet with the pipeline containing the different sized pipe as mentioned above.

The alignment of positions of the pipe length and the lining tube in the circumferential direction is also important in the case of a pipeline transporting abrasive fluid because it is necessary to adopt the use of a lining tube having a greater thickness at its lower side position.

Moreover, the fastening member arranged with the flange portion at the outlet end of the pipeline serves as a regulating plate (spacer) for adjusting the difference in the length of the lining tube at this end portion of the pipeline.

The outer fastening member of the two fastening members (eg. 85b in Fig. 8) is removed when the pipeline is connected to another pipeline.

The following examples are given in illustration of the invention and are not intended as limitations thereof.

Example 1

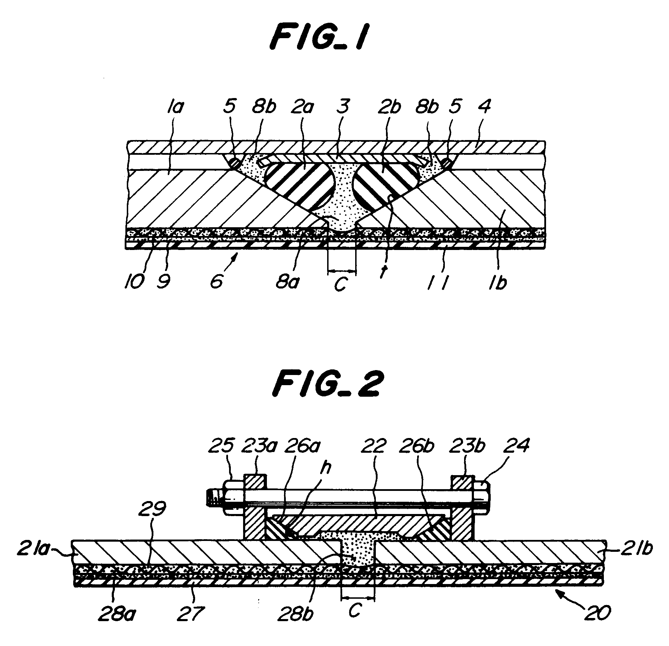

Fig. 1 shows a first embodiment of connecting pipe lengths to each other using a sleeve type expansion joint. In this case, a tapered portion t is formed on each end of pipe lengths 1a and 1b to be connected to each other, and a pair of rubber rings 2a, 2b are fitted onto the opposed tapered portions 6, and the outside of these rubber rings 2a, 2b is covered with an elastic band 3, a rigid outer sleeve 4 is fitted onto the outer surfaces of the pipe lengths 1a, 1b and the band 3, whereby the expansion joint is constructed. Furthermore, a plurality of rigid seal rings 5 are secured to the inner peripheral surface of the outer sleeve 4 so as to contact with the outer peripheral surfaces of the pipe lengths 1a, 1b. A space portion defined by the seal ring 5 and the rubber rings 2a, 2b and an annular space between the rubber rings 2a and 2b are filled in by high viscosity and non-drying pressure sensitive adhesives 8a and 8b.

A flexible lining laminate 6, comprised of a woven fabric 10 impregnated with a liquid plasticizer, a viscous pressure sensitive adhesive layer 9 (pressure sensitive adhesive double coated sheet) and a lining tube 11 are formed on the inner peripheral surfaces of the pipe lengths 1a and 1b over a whole region, which includes the expansion joint portion, in the axial direction thereof. That is, the lining laminate 6 is formed without interruption at the annular space portion C in the expansion joint for the connected pipe lengths 1a and 1b. Although the non-drying pressure sensitive adhesive 8a fills in the annular space portion C, some projects toward the inner peripheral surfaces of the pipe lengths 1a and 1b, such extra adhesive is softened by the liquid plasticizer impregnated in the woven fabric 8 to flow in the axial direction of the pipe, so that the portion of the lining laminate 6 corresponding to the annular space portion C becomes flat without swelling.

## Example 2

Fig. 2 shows a second embodiment of connecting pipe lengths to each other by use of another expansion joint. In this case, an outer sleeve 22, having a tapered portion h on its inner peripheral face at each side end, is fitted onto end portions of pipe lengths 21a and 21b, which are to be connected, on the outer side of pipe lengths. A pair of flanges 23a, 23b each having a plurality of bolt holes are arranged on the outer surfaces of the pipe lengths at both sides of the outer sleeve 22 and are fastened to each other by bolts 24 and nuts 25. Further, a pair of rubber rings 26a and 26b are interposed between each tapered portion h of the outer sleeve and each of the flanges.

A flexible lining laminate 20 comprised of a high viscosity and non-drying pressure sensitive adhesive double coated sheet layer 28a, a woven fabric 29 impregnated with a liquid plasticizer and a lining tube 27 is formed on the inner peripheral surfaces of the pipe lengths 21a and 21b. In this case, the lining laminate 20 is uninterrupted over the whole of the pipeline, similarly to to the embodiment of Example 1, and the lining laminate portion located at a position corresponding to the annular space portion C between the connected pipe lengths 21a and 21b has a flat shape without swelling. Moreover, a pressure sensitive adhesive 28b fills in the annular space portion C. Even if the volume of the annular space portion C is increased by shrinking the pipe lengths 21a and 21b to enlarge the width of the annular space portion, the shortage of pressure sensitive adhesive due to the increase of volume can be supplemented by the flowing of liquid plasticizer impregnated in the woven fabric 29 and the surrounding pressure sensitive adhesive softened by this liquid plasticizer. Moreover, when a shearing force is applied to the pipe lengths 21a, 21b and the lining tube 27, the woven fabric 26 easily moves accompanied with the flowing of the liquid plasticizer, so that there is no fear of locally elongating only the portion of the lining tube corresponding to the annular space portion C as in the conventional technique.

## Example 3

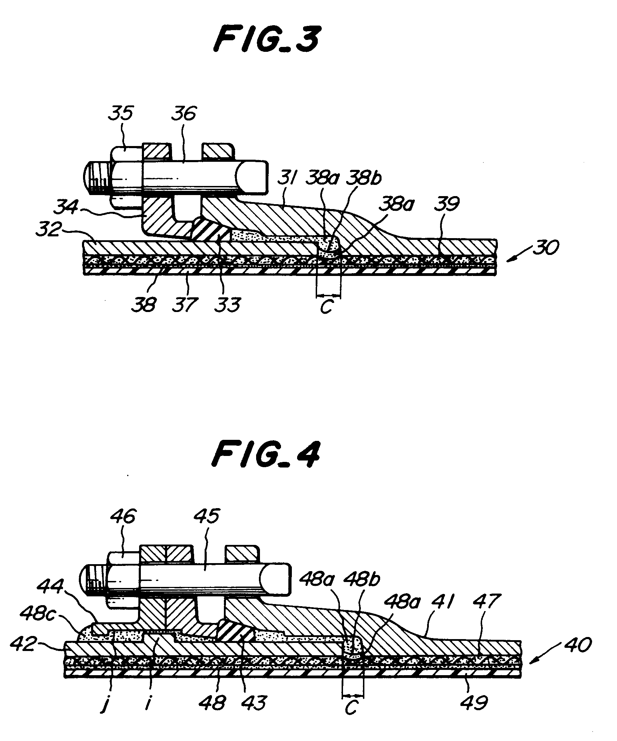

Fig. 3 shows a third embodiment of connecting pipe lengths to each other by the use of a further expansion joint.

A pipe length 31 is connected to another pipe length 32 in an airtight manner by fitting the pipe length 32 into an end portion of the pipe length 31, interposing a rubber ring 33 in a stuffing box defined between the pipe lengths 31 and 32, and pushing and supporting the rubber ring 33 with a ground cover 34. In this case, the ground cover 34 is fastened to the pipe length 31 by stud bolt 35 and nut 36.

A flexible lining laminate 30 comprised of a pressure sensitive adhesive double coated sheet layer 38, a woven fabric 39 impregnated with a liquid plasticizer and a lining tube 37 is formed on the inner peripheral surface of the pipe lengths 31, 32 over a full length of a pipeline similarly to the embodiments of Examples 1 and 2. Furthermore, an annular space C of the expansion joint portion containing a separation sheet 38b is filled in by a pressure sensitive adhesive 38a, wherein the pressure sensitive adhesive 38a divided off by the separation sheet 38b and facing the woven fabric 39 is softened by the liquid plasticizer in the woven fabric 39, so that the portion of the lining tube located at a position corresponding to the annular space C has a flat shape without swelling.

## Example 4

Fig. 4 shows a fourth embodiment of connecting pipe lengths to each other through a further expansion joint. This embodiment uses a sleeve type expansion joint similar to those of Examples 1 to 3.

In this embodiment, a pipe length 41 is connected to another pipe length 42 by inserting the pipe length 42 into an end portion of the pipe length 41, airtightly inserting a rubber ring 43 into a stuffing box defined between the outer peripheral surface of the pipe length 42 and a cut space below the flange end of the pipe length 41, and pushing the exposed face of the rubber ring 43 with a ground cover 44. Moveover, the ground cover 44 is fixed to the flange portion of the pipe length 41 by the action of stud bolts 45 and nuts 46. A convex portion i is formed on the outer peripheral surface of the pipe length 42 in place, while a concave portion j is formed on the inner peripheral surface of the ground cover 44. Thus, the stretching of the connected pipe lengths 41 and 42 is restrained by the convex portion i and the concave portion j.

In the above structure, a pressure sensitive adhesive 48a fills in an annular space C of the expansion joint portion, which contains a separation sheet 48b, and a pressure sensitive, adhesive 48c fills in a space produced in the joint portion between the convex portion i and the concave portion j. A flexible lining laminate 40 comprised of a pressure sensitive adhesive double coated sheet layer 48, a woven fabric 47 impregnated with a liquid plasticizer and a lining tube 49 is formed on the inner peripheral surfaces of the connected pipe lengths 41, 42 over a full length of a pipeline similarly to the embodiments of Examples 1 to 3.

Hence, it will now be apparent that pipe lengths substantially as described herein have the following merits:

(1) In the expansion joint portion of the pipe lengths, there is no uneven portion as with the conventional technique. Hence, erosion, cavitation and the like are not caused and the sedimentation of earth and sand can also be prevented, consequently damage to rubber rings (packing) as well as the leakage of water can be prevented.

(2) The thickness of the conventional lining tube is about 0.5 mm∼3.00 mm, while the thickness of the lining laminate according to the invention can freely and properly be changed in accordance with the purpose of use. However, the thickness of the lining laminate is usually within a rnage of 6∼60 mm. Particularly when the dredged stones are transported, the thickness may be more than 60 mm. The durability of the pipeline can, hence, be improved and the maintenance cost can be reduced.

(3) Since the expansion joint portion can be completely covered with the pressure sensitive adhesive, the rubber ring and the like can be separated from fluids passing through the pipeline, and consequently the degradation of the pipe length and the occurrence of rust or the like can be prevented.

(4) The pressure sensitive adhesive substantially fills in the space of the expansion joint portion, whereby the flexibility of the joint is improved. As a result, such an expansion joint provides an advantage when laying a pipeline on complicated topography and has an excellent ability to absorb and relax external forces such as earthquakes or the like thereby reducing the damage to the joint.

(5) Even when the annular space changes due to a change of the joint portion, swelling of the lining tube is not caused, and consequently the wearing of the lining tube at the position corresponding to the joint portion can be prevented.

(6) Even when relative displacement between the pipe length and the woven fabric is generated by a rapid change of the expansion joint portion, the liquid plasticizer impregnated in the woven fabric flows at the interface, and consequently a large shearing stress is never applied to the woven fabric.

(7) The presence of the woven fabric serves to reduce the necessary strength characteristics of the reinforcing sheet to be embedded in the pressure sensitive adhesive, and also acts to prevent damaging of the pressure sensitive adhesive double coated sheet and the lining tube whilst drawing the lining tube into the inside of the pipe length. Further, the liquid plasticizer impregnated in the woven fabric acts as a lubricant to reduce the drawing force for the lining tube. Therefore, thick and heavy lining tubes can easily be drawn over a long distance.

(8) The woven fabric impregnated with the liquid plasticizer is disposed in the lining laminate, so that even when defective portions comprising rust, scale and the like are existent in the inner surface of the pipe lenth, the liquid plasticizer containing a rust preventive agent penetrates into these defective portions. Therefore, careful surface treatment of the pipe lengths is unnecessary.

(9) Even when variations in the amount of the pressure sensitive adhesive in the annular space are caused due to relative displacements caused by stretching of the pipe length, they are rapidly corrected by the flowing of the liquid plasticizer impregnated in the woven fabric as well as the surrounding pressure sensitive adhesive, softened by the liquid plasticizer. Hence, the joint portion can be always held in a flat form.

(10) Even when shear stress is caused between the pipe length and the lining tube by the relative displacement due to stretching of the pipe length, relaxation of stress is rapidly caused by the liquid plasticizer in the woven fabric, and consequently aging and degradation of the lining laminate through the stress are not caused and durability is improved.

(11) In the conventional method for lining a curved pipe length, a straight lining tube is curved for lining, as a result wrinkles are generated on the inside bend of the curved portion thereby making the flow resistance large, while the thickness of the lining tube is reduced in the outside bend of the curved portion by tension causing increased tensile stress. As a result, degradation due to stress is more likely to be caused.

On the contrary, according to the above embodiments a lining tube having a curvature equal to that of the curved pipe is drawn into the pipeline instead. That is, the lining tube comprises a straight lining tube portion and a curved lining tube portion and is adhered to the inner peripheral surface of the pipeline by the action of the woven fabric and pressure sensitive adhesive sheet after enlargement of the lining tube, as a result the degradation of the curved lining tube is substantially reduced.

(12) The worn lining tube can easily be peeled off from the inner peripheral surface of the pipeline and replaced with a new lining tube. That is, the fixed portion of the worn lining tube is released at each end of the pipeline and then compressed air is pumped between the pipeline and the woven fabric, whereby the worn lining tube can easily be peeled off from the pipeline. Further, the worn lining tube can easily be removed from the pipeline by drawing the woven fabric.

(13) The lining laminate can be applied to simple joints between pipes for the transportation of sewage or the like, whereby the leakage of sewage from the joint portion as well as the release of the joint portion due to an earthquake can easily be prevented.

## Claims

1. A pipeline provided with a lining laminate (6) comprising: a plurality of pipe lengths (1a, 1b), which are individually connected to each other through one or more expansion joints; and a lining tube (11) arranged within and adhered to inner surfaces of the pipe lengths by use of a layer of pressure sensitive adhesive (9), raid pressure sensitive adhesive (9) being interposed between said pipe lengths (1a, 1b) and said lining tube (11),

characterised in that said pressure sensitive adhesive occupies an annular space in each of one or more connecting portions between said pipe lengths (1a, 1b);

in that said layer of pressure sensitive adhesive comprises a reinforcing sheet with a pressure sensitive adhesive applied to both surfaces thereof;

and in that a woven fabric (10) impregnated with liquid plasticizer containing a rust preventative agent is interposed between said pressure sensitive adhesive (9) and said pipe lengths (1a, 1b), such that said lining tube (11), said layer of adhesive (9), said reinforcing sheet and said impregnated woven fabric form, in combination, the lining laminate (6).

2. A pipeline according to claim 1, wherein said woven fabric (10) contains a pressure sensitive adhesive instead of said liquid plasticizer at a portion corresponding to each end portion of the connected pipe lengths (1a, 1b), and wherein said lining tube (11), said pressure sensitive adhesive and said woven fabric (10) are fastened in an airtight manner to a flange (23a, 23b) arranged on each said end portion of said connected pipe lengths (1a, 1b).

3. A pipeline according to claim 1, wherein a separation sheet (57) is embedded in said pressure sensitive adhesive (55) filling in said annular space (i) to prevent diffusion of said liquid plasticizer from said woven fabric (54) toward said expansion joint portion.

4. A method of forming a pipeline by connecting pipe lengths (1a, 1b) to each other through at least one intermediate expansion joint and arranging a lining tube (11) on an inner peripheral surface of at least one pipe length (1a, 1b) through a pressure sensitive adhesive, which comprises

setting pressure sensitive adhesive (8a) in a ring-like form in an annular space portion (c) defined by an expansion joint;

folding the lining tube (60) into a flat form and at the same time piling and mounting a pressure sensitive adhesive double coated sheet (28a), embedding a reinforcing sheet (58) therein, and a woven fabric (54) impregnated with a liquid plasticizer on upper and lower faces of the folded lining tube (60):

rounding the folded lining tube (60), provided with the pressure sensitive adhesive double coated sheet (28a) and the woven fabric (54), into a cylindrical form, spirally winding a fastening string around the lining tube (60), drawing the rounded lining tube (60) into an inside of an end portion of the pipe length (1a, 1b) by the guidance of a wire rope and passing it through the pipe length (1a, 1b);

fixing a rear end portion of the lining tube (60) to the inner peripheral surface of the end portion of the pipe length (1a, 1b) at a lead-in side of the pipe length (1a, 1b), and arranging a launcher for a pig member (104) at the lead-in side of the pipe length (1a, 1b) and a catcher for said pig member (104) at a feed-out side of the pipe length (1a, 1b);

fitting the pig member (104) arranged in the launcher, and which pig member (104) has a freely reduceable diameter which is normally larger than the diameter of the lining tube (60), into a rear opening portion of the lining tube; and

pumping compressed air into the launcher to pressurize a back face of the pig member (104) and simultaneously sucking air from the catcher to progress the pig member (104) forward, whereby the folded lining tube (60) is successively enlarged to push and adhere to the inner peripheral surface of the pipe length (1a, 1b).

**Patentansprüche**

1. Rohrleitung mit einer auskleidenden Schicht (6) und aufweisend mehrere Einzelrohre (1a, 1b), die individuell miteinander über mindestens eine dehnfähige Verbindung verbunden sind, und ein auskleidendes Rohr (11), das innerhalb der inneren Oberflächen der Einzelrohre angeordnet und mit diesen durch Verwendung einer Schicht von selbsthaftendem Klebmittel (9) verbunden ist, wobei dieses selbsthaftende Klebmittel (9) zwischen den Einzelrohren (1a, 1b) und dem auskleidenden Rohr (11) angeordnet ist,

dadurch gekennzeichnet, daß das selbsthaftende Klebmittel einen Ringraum in mindestens einem Verbindungsbereich zwischen Einzelrohren (1a, 1b) einnimmt,

daß diese Schicht des selbsthaftenden Klebmittels eine verstärkende Lage aufweist, auf deren beide Oberflächen das selbsthaftende Klebmittel aufgebracht ist,

und daß ein Webstoff (10), der mit einem flüssigen, einen rostverhinderndes Mittel enthaltenden Weichmacher imprägniert ist, zwischen dem selbsthaftenden Klebmittel (9) und den Einzelrohren (1a, 1b) dergestalt angeordnet ist, daß das auskleidende Rohr (11), die Schicht des Klebmittels (9), die verstärkende Lage und der imprägnierte Webstoff in Kombination die auskleidende Schicht (6) bilden.

2. Rohrleitung nach Anspruch 1, bei der der Webstoff (10) ein selbsthaftendes Klebmittel anstatt des flüssigen Weichmachers in einem Bereich enthält, der jedem Endbereich der verbundenen Einzelrohre (1a, 1b) entspricht und bei der das auskleidende Rohr (11), das selbsthaftende Klebmittel und der Webstoff (10) luftdicht an einem Flansch (23a, 23b) festgelegt sind, der auf jedem dieser Endbereiche der verbundenen Einzelrohre (1a, 1b) angeordnet ist.

3. Rohrleitung nach Anspruch 1, bei der eine Trennschicht (57) in das selbsthaftende Klebmittel (55), das den Ringraum (i) füllt, eingebettet ist, um eine Diffusion des flüssigen Weichmachers von dem Webstoff (54) zum dehnfähigen Verbindungsbereich hin zu vermeiden.

4. Verfahren zur Ausbildung einer Rohrleitung durch Verbinden von Einzelrohren (1a, 1b) miteinander durch zumindest eine, zwischengeschaltete dehnfähige Verbindung und zur Anordnung eines auskleidenden Rohres (11) an einer inneren, umlaufenden Oberfläche zumindest eines Einzelrohres (1a, 1b) mittels eines selbsthaftenden Klebmittels, welches Verfahren folgende Schritte aufweist

Einbringen eines selbsthaftenden Klebmittels (8a) in ringähnlicher Ausbildung in einen Ringbereich (c), der begrenzt ist durch eine dehnfähige Verbindung,

Falten des auskleidenden Rohres (60) in flache Form und gleichzeitig Aufbringen und Anordnen einer beidseitig mit einem selbsthaftenden Klebmittel belegten Schicht (28a), Einbetten einer verstärkenden Lage (58) darin und Anordnen eines Webstoffs (54), der mit einem flüssigen Weichmacher imprägniert ist, auf der oberen und unteren Fläche des gefalteten auskleidenden Rohres (60),

Überführen des gefalteten, auskleidenden Rohres (60), das mit der beidseitig mit einem selbsthaftenden Klebmittel belegten Schicht (28a) und dem Webstoff (54) versehen ist, in eine zylindrische Form, schraubenlinienförmiges Wickeln eines fadenförmigen Materials um das auskleidende Rohr (60), Einziehen des in runder Form vorliegenden, auskleidenden Rohres (60) in einen Endbereich eines Einzelrohres (1a, 1b) bei Führung durch ein Seil und dessen Leiten durch das Einzelrohr (1a, 1b),

Befestigen eines rückwärtigen Endbereichs des auskleidenden Rohres (60) an die innere, umlaufende Oberfläche des Endbereichs des Einzelrohres (1a, 1b) an der Einführseite des Einzelrohres (1a, 1b) und Anordnen einer Startvorrichtung für ein Aufweiteteil (104) an der Einführseite des Einzelrohrs (1a, 1b) und einer Aufnahmevorrichtung für dieses Aufweiteteil (104) an der Austrittsseite des Einzelrohres (1a, 1b),

Einbringen des Aufweiteteils (104), das in der Startvorrichtung angeordnet ist und das einen frei reduzierbaren Durchmesser aufweist, der normalerweise größer ist als der Durchmesser des auskleidenden Rohres (60) in den rückwärtigen Öffnungsbereich des auskleidenden Rohres und

Einpumpen von Druckluft in die Startvorrichtung, um die rückwärtige Fläche des Aufweiteteils (104) mit Druck zu beaufschlagen und gleichzeitig Absaugen von Luft von der Fangvorrichtung, um das Aufweiteteil (104) vorwärts zu bewegen, wodurch das gefaltete auskleidende Rohr (60), nach und nach aufgeweitet, gedrückt und angeklebt wird an die innere Oberfläche des Einzelrohres (1a, 1b).

**Revendications**

1. Une conduite pourvue d'un laminé de gainage (6) comprenant: plusieurs éléments de tuyau (1a, 1b), individuellement raccordés les uns aux autres par l'intermédiaire d'un ou de plusieurs joints de dilatation; ainsi qu'un tuyau de gainage (11) agencé à l'intérieur des surfaces internes des éléments de tuyau et y adhérant, au moyen de l'utilisation d'une couche d'adhésif sensible à la pression (9), ledit adhésif sensible à la pression (9) étant interposé entre lesdits éléments de tuyau (1a, 1b) et ledit tuyau de gainage (11),

caractérisée en ce que ledit adhésif sensible à la pression occupe un espace annulaire dans une ou dans plusieurs parties de raccordement entre lesdits éléments de tuyau (1a, 1b);

en ce que ladite couche d'adhésif sensible à la pression comprend une feuille de renforcement, un adhésif sensible à la pression étant appliqué sur les deux faces de cette feuille;

et en ce qu'un tissu (10) imprégné d'un plastifiant liquide contenant un antirouille est interposé entre ledit adhésif sensible à la pression (9) et lesdits éléments de tuyau (1a, 1b), de sorte que ledit tuyau de gainage (11), ladite couche d'adhésif (9), ladite feuille de renforcement et ledit tissu imprégné forment ensemble le laminé de gainage (6).

2. Une conduite selon la revendication 1, dans laquelle ledit tissu (10) contient un adhésif sensible à la pression au lieu du dit plastifiant liquide en une partie correspondant à chaque partie d'extrémité des éléments du tuyau (1a, 1b) raccordés et dans laquelle ledit tuyau de gainage (11), ledit adhésif sensible à la pression et ledit tissu (10) sont fixés de façon hermétique à une bride (23a, 23b) agencée sur chaque partie d'extrémité desdits éléments de tuyau (1a, 1b).

3. Une conduite selon la revendication 1, dans laquelle une feuille de séparation (57) est encastrée dans ledit adhésif sensible à la pression (55), remplissant ledit espace annulaire (i), en vue d'empêcher une diffusion du dit plastifiant liquide du dit tissu (54) vers ladite partie du joint de dilatation.

4. Une méthode de production d'une conduite par raccordement des éléments de tuyau (1a, 1b) les uns aux autres par l'intermédiaire d'au moins un joint de dilatation et agencement d'un tuyau de gainage (11) sur une surface périphérique interne d'au moins un élément de tuyau (1a, 1b) au moyen d'un adhésif sensible à la pression, comprenant les étapes suivantes:

pose sous forme annulaire de l'adhésif sensible à la pression (8a) dans une partie d'un espace annulaire (c) définie par un joint de dilatation;

pliage du tuyau de gainage (60) en une forme plate ainsi qu'empilage et montage simultanés d'une feuille à double revêtement d'adhésif sensible à la pression (28a), encastrement d'une feuille de renforcement (58) dans celle-ci, un tissu (54) imprégné d'un plastifiant liquide étant appliqué sur les faces supérieure et inférieure du tuyau de gainage plié (60);

arrondissage du tuyau de gainage plié (60), pourvu de la feuille à double revêtement d'adhésif sensible à la pression (28a) et du tissu ((4), en une forme cylindrique, enroulement en spirale d'une corde de fixation autour du tuyau de gainage (60), introduction du tuyau de gainage arrondi (60) à l'intérieur d'une partie d'extrémité de l'élément de tuyau (1a, 1b), avec guidage par un fil métallique, et passage du tuyau de guidage à travers l'élément de tuyau (1a, 1b);

fixation d'une partie d'extrémité arrière du tuyau de gainage (60) à la surface périphérique interne de la partie d'extrémité de l'élément de tuyau (1a, 1b) sur un côté d'entrée de l'élément de tuyau (1a, 1b), et agencement d'un lanceur pour un élément râcleur (104) sur le côté d'entrée de l'élément de tuyau (1a, 1b) ainsi que d'un récepteur du dit élément râcleur (104) sur un côté de sortie de l'élément de tuyau (1a, 1b);

insertion de l'élément râcleur (104) agencé dans le lanceur, ledit élément râcleur (104) ayant un diamètre librement réductible, normalement plus grand que le diamètre du tuyau de gainage (60), dans une partie d'ouverture arrière du tuyau de gainage; et

pompage d'air comprimé dans le lanceur pour mettre sous pression une face arrière de l'élément râcleur (104) et aspiration simultanée d'air du récepteur pour faire avancer l'élément râcleur (104) vers l'avant, le tuyau de gainage plié (60) étant ainsi successivement élargi pour heurter la surface périphérique interne de l'élément de tuyau (1a, 1b) et y adhérer.

# FIG_1

# FIG_2

# FIG.3

# FIG.4

# FIG_5

EP 0 344 896 B1

# FIG_6

## FIG_7

FIG.8

EP 0 344 896 B1

## FIG_9a

9la

## FIG_9b

9lb

## FIG_9c

9lc

## FIG_9d

9ld

## FIG_10a

## FIG_10b